# EUROPÄISCHE PATENTSCHRIFT

(11) **EP 2 637 533 B1**
(45) Veröffentlichungstag und Bekanntmachung des Hinweises auf die Patenterteilung: **18.03.2015**
(21) Anmeldenummer: 11776460.5
(22) Anmeldetag: 02.11.2011
(51) Int. Cl.: A47J 31/36, F04B 17/04

(54) **GETRÄNKEZUBEREITUNGSEINRICHTUNG MIT DURCHFLUSSERFASSUNG**
BEVERAGE PREPARATION DEVICE HAVING FLOW MEASUREMENT
ÉQUIPEMENT DE PRÉPARATION DE BOISSONS COMPORTANT UNE DÉTECTION DU DÉBIT

(30) Priorität: 12.11.2010 DE 102010043862
(43) Veröffentlichungstag der Anmeldung: 18.09.2013
(73) Patentinhaber: BSH Bosch und Siemens Hausgeräte GmbH, 81739 München (DE)
(72) Erfinder: HAUSER, Andreas, 83370 Seeon (DE); HOECK, Florian, 83313 Siegsdorf (DE); MATHES, Anton, 83364 Neukirchen am Teisenberg (DE); MAYR, Wolfgang, 85435 Erding (DE)
(86) Internationale Anmeldenummer: PCT/EP2011/069220
(87) Internationale Veröffentlichungsnummer: WO 2012/062628

(56) Entgegenhaltungen:
- WO-A1-2009/083179
- DE-A1- 3 122 778
- DE-A1-102007 033 274
- US-B1- 6 942 470

## Beschreibung

Die Erfindung betrifft eine Getränkezubereitungseinrichtung mit einer Schwingkolbenpumpe mit einem Pumpengehäuse, mit mindestens einer Pumpkammer, mit einem Schwingkolben in der Pumpkammer und mit einer die Pumpkammer koaxial umschließenden Magnetspule. Die Erfindung betrifft außerdem ein Verfahren zum Betreiben einer derartigen Getränkezubereitungseinrichtung.

Schwingkolbenpumpen werden in Getränkezubereitungseinrichtungen zur Förderung der Flüssigkeit für die Zubereitung der Getränke eingesetzt. Um ihre jeweilige Fördermenge genau ermitteln und damit die Flüssigkeit für die Getränke genau dosieren zu können, werden zusätzliche Messeinrichtungen, so genannte Durchflussmesser oder Flowmeter, eingesetzt. Die Kenntnis des Durchflusses durch die Schwingkolbenpumpe ist außerdem Voraussetzung für eine genaue Einstellung der Flüssigkeitstemperatur. Je genauer der Durchfluss bekannt ist, desto genauer kann die Temperatur eingestellt werden. Eine genaue Temperaturregelung ist Voraussetzung für einen optimalen Brühvorgang. EP 2 080 460 A1 zeigt eine Kaffeemaschine mit einer Flüssigkeitsleitung, in der ein Durchflussmesser und eine Schwingkolbenpumpe angeordnet sind.

Die US-B 6 942 470 B1 offenbart eine Schwingkolbenpumpe für eine Getränkezubereitungseinrichtung, mit einem Pumpengehäuse, mit einer Pumpkammer, mit einem Schwingkolben in der Pumpkammer, mit einer die Pumpkammer koaxial umschließenden Magnetspule und mit einem stromauf der Pumpkammer integrierten Durchflussmesser.

Die DE 10 2007 033 274 A1 beschreibt eine Kolbenstruktur für eine Kolbenpumpe zum Ausstoßen eines Pumpmediums. Sie umfasst einen Verdrängungskörper mit einem axialen Durchlass, der von dem Verdrängungskörper zumindest teilweise begrenzt ist und zum fluidalen Verbinden einer Zulaufseite der Kolbenpumpe mit einer der Zulaufseite axial gegenüberliegenden Abgabeseite ausgelegt ist, und ein dem Durchlass zugeordnetes Ventil, durch das der Durchgang für eine Kolbenfunktion der Kolbenstruktur schließbar ist, um eine Pumpmedienströmung längs des Durchlasses an der Kolbenstruktur vorbei zu sperren, und für eine Leerlauffunktion der Kolbenstruktur freigebbar ist. Um eine Pumpmedienströmung längs des Durchlasses an der Kolbenstruktur vorbei durchzulassen, ist vorgesehen, dass ein Ventilglied gegenüber dem Verdrängungskörper lose in einer Zwangsführung gelagert ist.

Die DE 31 22 778 A1 beschreibt eine elektromagnetische Pumpe für ein Fluid mit einem an einem hin- und her bewegbaren Kolben befestigtem Magneten sowie einem das durch den sich bewegenden Magnet erzeugte magnetische Feld ermittelnden Halleffektschalter.

Aufgabe der vorliegenden Erfindung ist es, eine Getränkezubereitungseinrichtung mit einem demgegenüber vereinfachten Aufbau anzugeben.

Diese Aufgabe wird bei einer Getränkezubereitungseinrichtung der eingangs genannten Art erfindungsgemäß durch eine Erfassungsvorrichtung gelöst, die so ausgebildet ist, dass sie die Wegänderung und/oder die aktuelle Position des Schwingkolbens in der Pumpkammer während eines Pumpvorgangs erfasst und daraus unter Berücksichtigung des Schluckvolumens der Schwingkolbenpumpe den aktuellen Durchfluss der Schwingkolbenpumpe ermittelt. Die Erfindung wendet sich also davon ab, den Durchfluss durch die Schwingkolbenpumpe mittels einer geeigneten Messeinrichtung unmittelbar zu messen. Sie verfolgt vielmehr das Prinzip, den Durchfluss mittelbar, nämlich aus bekannten und während des Betriebs der Zubereitungseinrichtung unveränderbaren Daten und einer zeitbezogenen Erfassung der Lage und/oder der Lageänderung des Schwingkolbens zu ermitteln.

Die Funktionsweise einer Schwingkolbenpumpe basiert auf einem durch die Magnetspule hervorgerufenen magnetischen Feld, welches den ferromagnetischen Schwingkolben gegen eine Feder spannt und dann wieder entlässt. Dabei drückt zunächst das magnetische Feld den Schwingkolben gegen die Spannung der Feder in eine erste Endlage. Durch den Unterdruck wird dadurch Flüssigkeit eingangsseitig in die Pumpkammer gesaugt. Dann wird das magnetische Feld unterbrochen und durch das Entspannen der Feder wird der Schwingkolben in eine zweite Endlage bewegt. Dabei wird die angesaugte Flüssigkeit ausgangsseitig aus der Pumpkammer verdrängt. Während des Pumpvorgangs wiederholt sich dieser Pumpzyklus. Die Wegänderung und/oder die Position des Schwingkolbens können hierbei direkt durch eine relative Positionsmessung des Schwingkolbens zu einem Bezugspunkt auf oder in der Schwingkolbenpumpe erfasst werden. Die Wegänderung und/oder die Position des Schwingkolbens können aber auch indirekt aus der Induktivität der Magnetspule abgeleitete werden, da sich die Induktivität der Magnetspule in Abhängigkeit von der Eintauchtiefe des Schwingkolbens in das Innere der Magnetspule ändert. Aus der Wegänderung und/oder der aktuellen Position des Schwingkolbens und dem bekannten Schluckvolumen der Schwingkolbenpumpe lässt sich der aktuelle Durchfluss, dass heißt der Fluss durch die Schwingkolbenpumpe, für jeden Zeitpunkt bestimmen. Das Schluckvolumen der Schwingkolbenpumpe entspricht dem Volumen der Flüssigkeit, die durch einen Hub des Schwingkolbens gefördert wird. Es kann anhand von Messungen für jede Schwingkolbenpumpe individuell bestimmt werden. Ein wesentlicher Vorteil besteht darin, dass dadurch auf eine zusätzliche Einrichtung zur Erfassung des Durchflusses verzichtet werden kann. Das vereinfacht den Aufbau der Getränkezubereitungseinrichtung und senkt die Produktionskosten. Insbesondere kann der Platz für ein Flowmeter und die zu seinem Betrieb benötigte Schlauchschleife zwischen Schwingkolbenpumpe und Flowmeter eingespart werden. Dadurch wird eine kompakte Bauform der Getränkezubereitungseinrichtung ermöglicht, weswegen die Schwingkolbenpumpe insbesondere auch dort eingesetzt werden kann, wo kleine Mengen bei geringem Platzbedarf gefördert werden müssen, z.B. in sehr kompakten Kaffeemaschinen.

Zur Regelung eines jeweils konstanten Durchflusses für unterschiedliche Brüh- und Dosierprogramme ist eine schnelle Durchflussmessung nötig. Mit der Erfassungseinrichtung kann der aktuelle Durchfluss und damit die Fördermenge sehr schnell und mit hoher Auflösung, dass heißt innerhalb eines Pumpzyklus ermittelt werden. Dadurch ist eine weit schnellere Regelung als mit einem Flowmeter realisierbar. Für das Ermitteln der realen Fördermenge pro Hub ist eine möglichst genaue Kenntnis der beiden Endlagen des Schwingkolbens eines jeden Pumpzyklus erforderlich. Eine einmalige Messung der Position des Schwingkolbens ist möglich. Vorteilhafterweise misst die Erfassungseinrichtung die Position des Schwingkolbens mehrmals innerhalb des gesamten Pumpzyklus, um die beiden Endlagen des Schwingkolbens möglichst genau zu ermitteln. Dadurch ist eine weit schnellere Regelung als mit einem Flowmeter realisierbar. Zum Beispiel bei einer mit 50 Hz Wechselstrom betriebenen Schwingkolbenpumpe kann der aktuelle Durchfluss der Dauer eines Pumpzyklus entsprechend alle 20 ms mit vorgeschalteter Diode entspricht ein Hub der Dauer einer Netzhalbwelle, d. h etwa 10 ms. Die Messfrequenz beträgt dabei 50 Hz, d.h. alle 20 ms finden innerhalb 10 ms bestimmt werden.

Besondere Rücksicht muss auf die Schalldämmung der Schwingkolbenpumpen in der Getränkezubereitungseinrichtung genommen werden. Aufgrund der großen Geräuschentwicklung der Schwingkolbenpumpen insbesondere beim Hochfahren und beim Trockenlauf, dass heißt wenn sie ohne Last arbeiten, werden Schwingkolbenpumpen aufwändig vom Rest der Getränkezubereitungseinrichtung entkoppelt. Die Geräuschentwicklung entsteht hauptsächlich durch das Anschlagen des Schwingkolbens am Gehäuse der Pumpkammer nach Erreichen der ersten Endlage, wenn der Schwingkolben gegen die Feder gespannt wird. Mit Hilfe der Positions- bzw. Wegerfassung kann der Schwingkolben so geregelt werden, dass das Anschlagen des Schwingkolbens bei Erreichen seiner ersten Endlage vermieden wird. Dazu wird die Stromzufuhr der Magnetspule entsprechend gesteuert. Das ermöglicht einen leisen Betrieb der Schwingkolbenpumpe und erhöht dadurch die Attraktivität der Getränkezubereitungseinrichtung. Es muss außerdem deutlich weniger konstruktiver Aufwand zur Schwingungsdämpfung der Schwingkolbenpumpe und zur Geräuschminimierung betrieben werden. Dadurch können Produktionskosten gespart werden.

Außerdem kann beim Betrieb der erfindungsgemäßen Schwingkolbenpumpe Energie gespart werden. Durch das rechtzeitige Abschalten der Stromzufuhr der Magnetspule bei Erreichen der ersten Endlage vor dem Anschlagen des Schwingkolbens kann eine weitere und vor allem unnötige Energiezufuhr vermieden werden, die für die Pumpleistung nicht mehr gebraucht wird. In Versuchen konnte eine Energieeinsparung von 30% nachgewiesen werden. Durch die Erfassung des Schwingkolbenhubs kann zudem Rückschluss auf den Gegendruck gezogen werden. Dieses Wissen kann zur Verbesserung der Qualität der zubereiteten Getränke und zur Selbstdiagnose des Geräts verwendet werden.

Nach einer vorteilhaften Ausgestaltung ist die Erfassungsvorrichtung mit der Magnetspule elektrisch verbunden und weist ein Messsystem zur Messung der aktuellen Induktivität der Magnetspule mit einer Abbildungseinheit auf, die aus der gemessenen Induktivität die aktuelle Position und/oder Wegänderung des Schwingkolbens bestimmt. Das Prinzip der Erfassungsvorrichtung beruht hierbei auf einer physikalischen Gesetzmäßigkeit der elektro-magnetischen Wechselwirkung, nach der sich über den möglichen Weg des Schwingkolbens die Induktivität der Magnetspule ändert. Bei Laborgeräten hat sich z. B. die Induktivität durch die Bewegung des Schwingkolbens bei einer Größenordnung von 1 bis 2 Henry um etwa den Faktor 2 geändert.

Für die Messung der aktuellen Induktivität der Magnetspule sind verschiedene Methoden möglich. Schwingkolbenpumpen werden überwiegend mit Wechselstrom betrieben. Bei mit Wechselstrom betriebenen Schwingkolbenpumpen kann die Induktivität der Magnetspule durch Erfassen der Phasenverschiebung von Strom zu Spannung in der Magnetspule ermittelt werden. Dazu kann das Messsystem der Versorgungsspannung, z. B. mit Hilfe einer Oszillatorschaltung, ein sinusförmiges Messsignal überlagern. Die Phasenverschiebung wird dabei über einen niederohmigen Nebenschlusswiderstand, einen so genannten Shunt, gemessen. Durch eine Auswertung der Phasenverschiebung errechnet das Messsystem die jeweils aktuelle Induktivität. Um dabei eine brauchbare Auflösung bei der Positionsbestimmung zu erhalten, ist die Frequenz des Messsignals so zu wählen, dass sie signifikant größer ist als die der Versorgungsspannung der Schwingkolbenpumpe. Zum Beispiel bei einer Versorgung der Schwingkolbenpumpe mit der in Deutschland üblichen Netzspannung von 50 Hz erhält man während eines Pumpzyklus bei einer Frequenz von 4 kHz 80 Messwerte. An das Messsystem werden ansonsten keine besonderen Anforderungen gestellt. Es muss lediglich so in die Anordnung der Getränkezubereitungseinrichtung integriert sein, dass die Messung parallel zum normalen Betrieb der Schwingkolbenpumpe durchgeführt werden kann.

Die Abbildung der Induktivitätswerte auf die entsprechende Position des Schwingkolbens in der Pumpkammer kann durch Messungen diskreter Werte, so genannter Stützwerte, ermittelt werden. Schwingkolbenpumpen können sich je nach Typ und Serie z. B. in Bauform und Material unterscheiden. Deshalb werden für jeden Typ bzw. für jede Serie die Stützwerte gesondert ermittelt. Die Interpretation der so gewonnenen Stützwerte erfolgt entweder über eine mathematische Korrekturfunktion oder mittels einer Look-Up-Table mit Zwischenwertinterpolation. Die Abbildungseinheit kann dazu kostengünstig als verbindungsprogrammierte Steuerung (VPS) implementiert werden, dass heißt als Schaltungsanordnung mit einfachen elektronischen Bauteilen. Alternativ kann eine speicherprogrammierte Steuerung (SPS) basierend auf einem Mikrocontroller mit integriertem Arbeits- und Programmspeicher zum Einsatz kommen. Außerdem kann die Erfassungsvorrichtung eine Einrichtung zur Kalibrierung aufweisen, da sich die physikalischen Eigenschaften der Schwingkolbenpumpe sowohl durch Abnutzungserscheinungen als auch durch sich wandelnde Umgebungsbedingungen verändern können. In einer bevorzugten, einfachen Ausgestaltung umfasst die Getränkezubereitungseinrichtung einen dafür entsprechend dimensionierten Messbecher, mit dessen Hilfe die Kalibrierung regelmäßig vom Anwender selbst oder einem Kundendienst durchgeführt werden kann. Der Messbecher kann dazu abnehmbar an dem Gerät befestig sein. In einer alternativen Ausgestaltung kann zur Kalibrierung ein Flowmeter eingesetzt werden. Damit ist es insgesamt möglich, über eine einfache Phasenwinkelmessung die Position des Schwingkolbens während eines Pumpzyklus zu verfolgen und daraus den Durchfluss der Schwingkolbenpumpe zu ermitteln. Der Vorteil dieser Ausgestaltung der Erfassungsvorrichtung besteht hauptsächlich darin, dass die Erfassung der Schwingkolbenposition über elektrische Erfassungsmittel ohne unmittelbaren Eingriff in die Schwingkolbenpumpe vorgenommen werden kann. Diese Lösung kann daher auch für bereits existierende Schwingkolbenpumpen eingesetzt werden.

In einer alternativen Ausgestaltung weist die Erfassungsvorrichtung einen LVDT (Linear Variablen Differentialtransformator) auf, der die Pumpkammer koaxial umschließt. Der LVDT besteht aus einer Primärspule und zwei Sekundärspulen. An die Primärspule wird eine konstante Wechselspannung, die so genannte Erregerspannung, angelegt. Um eine sinnvolle Auflösung bei der Messung zu erreichen, ist die Frequenz der Erregerspannung deutlich höher als die Frequenz der Schwingkolbenbewegung. Die Sekundärspulen sind in einem Sekundärstromkreis gegenphasig in Reihe geschaltet, so dass sich die an den Sekundärspulen abfallenden Spannungen voneinander subtrahieren. Wird der Schwingkolben bewegt, ändert das die Kopplungsfaktoren zwischen den beiden Sekundärspulen. Der LVDT liefert dabei ein Signal, das die Position des Schwingkolbens in der Pumpkammer widerspiegelt. Dieses Signal kann ausgewertet und in einen Positionswert umgerechnet bzw. als Positionswert interpretiert werden. Auf diese Weise kann die Position und/oder der Weg des Schwingkolbens verlustfrei, das heißt ohne Eingriff in den mechanischen Pumpvorgang erfasst werden.

In einer weiteren alternativen Ausgestaltung der Erfassungsvorrichtung befindet sich eine zum Beispiel stangenförmige Transfervorrichtung am Schwingkolben, die aus dem Pumpengehäuse herausragt. Die Transfervorrichtung ist dazu ausgebildet, die Bewegung des Schwingkolbens mechanisch auf eine Außenseite des Pumpengehäuses zu transferieren. Die Erfassungsvorrichtung weist außerdem einen Bewegungssensor auf, der die Wegänderung und/oder die aktuelle Position der Transfervorrichtung und damit des Schwingkolbens erfasst. Idealerweise ist die Transfervorrichtung so angeordnet, dass sie in der Bewegungsrichtung des Schwingkolbens aus dem Pumpengehäuse ragt, zum Beispiel in der Ansaugrichtung der Schwingkolbenpumpe. Das verringert den Konstruktionsaufwand, da in dieser Richtung, dem Querschnitt der Transfervorrichtung entsprechend, nur eine kleine Öffnung im Pumpengehäuse vorgesehen werden muss oder bereits für die Flüssigkeitszufuhr vorgesehen ist. Die Transfervorrichtung kann in einem Guss als verlängerter Schwingkolben ausgebildet sein. Sie kann aber auch als eigenständiges Bauteil in geeigneter Weise am Schwingkolben befestigt sein. Als Bewegungssensor können alle für die Erfassung linearer Bewegungen geeigneten Sensoren eingesetzt werden, die entweder kapazitiv, induktiv, optisch oder auf eine andere geeignete Art Bewegungen erfassen können. Dadurch kann die Bewegung des Schwingkolbens auf einfache Weise, dass heißt ohne großen Konstruktionsaufwand auch mit bereits bekannten, preisgünstigen Bewegungssensoren erfasst werden. Ein nennenswerter konstruktiver Eingriff in die Schwingkolbenpumpe kann sich dadurch erübrigen. Der geringe Konstruktionsaufwand und der Einsatz preisgünstiger Bewegungssensoren können sich wiederum positiv auf die Produktionskosten auswirken.

In einer vorteilhaften Ausgestaltung wird ein optischer Sensor als Bewegungssensor eingesetzt. Der optische Sensor umfasst einen Sender und einen Empfänger. Der Sender sendet einen optisch detektierbaren Strahl in Richtung des Empfängers. Der Strahl kann dabei sowohl aus sichtbarem als auch aus unsichtbarem Licht, wie zum Beispiel aus Infrarotlicht oder ultravioletter Strahlung, bestehen. Der optische Sensor ist so angeordnet, dass sein Strahl auf den aus dem Pumpenkörper herausgeführten Teil der Transfereinrichtung gerichtet ist und sich der Empfänger in Richtung des Strahls hinter der Transfereinrichtung befindet. Der Sender und der Empfänger sind dabei zueinander ausgerichtet. Der Strahl wird abhängig von der Bewegung bzw. der aktuellen Position der Transfervorrichtung entweder nicht, teilweise oder auch ganz verschattet. Der Empfänger wandelt die optische Strahlung in ein entsprechendes Ausgangssignal um, das sich proportional zur Verschattung des Strahls verhält. Anhand dieses Ausgangssignals kann die Erfassungsvorrichtung die Position und/oder den Weg des Schwingkolbens ermitteln. Der Vorteil dieser Ausgestaltung besteht darin, dass die Erfassung der Position und/oder des Wegs der Transfervorrichtung berührungslos und somit verlustfrei arbeitet.

Alternativ dazu kann der optische Sensor so im Pumpengehäuse angeordnet werden, dass sein Strahl unmittelbar auf den Schwingkolben gerichtet ist. Dadurch kann auf die Transfereinrichtung verzichtet werden. Jedoch muss dazu die Konstruktion der Schwingkolbenpumpe entsprechend geändert werden. Zum Beispiel können Teile des Pumpengehäuses insbesondere im Bereich der Pumpkammer aus einem für die optische Strahlung durchlässigen Material hergestellt sein.

In einer weiteren vorteilhaften Ausgestaltung befindet sich ein Magnet an der Transfervorrichtung, und ein Hallsensor dient als Bewegungssensor. Dabei ist der Magnet an einem Teil der Transfervorrichtung befestigt, der aus dem Pumpengehäuse herausragt, z. B. in Gegenflussrichtung am Ende der Transfervorrichtung. Alternativ kann die Transfervorrichtung an entsprechender Stelle direkt als Magnet ausgebildet sein. Der Hallsensor ist so angeordnet, dass er die aktuelle Position und/oder Wegänderungen des an der Transfervorrichtung befestigten Magneten optimal erfassen kann. Die am Hallsensor auftretende elektrische Spannung verändert sich entsprechend der Bewegung des Magneten. Aus der Spannung kann deshalb die Wegänderung und/oder die aktuelle Position der Transfervorrichtung und damit des Magnetkolbens erfasst werden. Ein Vorteil auch dieser Ausgestaltung ist, dass sie berührungslos und damit verlustfrei arbeitet. Ein weiterer Vorteil insbesondere gegenüber optischen Sensoren ist die Unempfindlichkeit gegen Schmutz und Wasser. Auf Magnetfelder hat (nicht-magnetisierter) Schmutz und Wasser keinen negativen Einfluss.

Alternativ dazu kann ein Teil des Schwingkolbens selbst als Magnet ausgebildet sein. Dazu sind der Magnet und der Hallsensor so angeordnet, dass das Magnetfeld der Magnetspule der Schwingkolbenpumpe die Messung nicht verfälschen kann.

Die eingangs genannte Aufgabe wird außerdem durch ein Verfahren zum Betreiben einer Getränkezubereitungseinrichtung gelöst. In dem erfindungsgemäßen Verfahren wird die Wegänderung und/oder die aktuelle Position des Schwingkolbens während des Pumpvorgangs erfasst und daraus unter Berücksichtigung des Schluckvolumens der Schwingkolbenpumpe der aktuelle Durchfluss der Schwingkolbenpumpe ermittelt. Wie bereits oben dargelegt, kann die Position und/oder Wegänderung indirekt aus einer abhängigen physikalischen Größe abgeleitet oder direkt durch eine Wege- oder Lagemessung ermittelt werden. Es kann dadurch auf ein Flowmeter verzichtet werden, wodurch sich die Produktionskosten verringern und eine kompaktere Bauform für die Getränkezubereitungseinrichtung ermöglicht wird. Der aktuelle Durchfluss der Schwingkolbenpumpe kann bei diesem Verfahren innerhalb nur eines Hubs des Schwingkolbens ermittelt werden. Das hat den Vorteil, dass die Fördermenge schnell und mit hoher Auflösung erfasst werden kann, weit schneller als mit einem herkömmlichen Flowmeter.

Das Verfahren kann nach einer vorteilhaften Ausgestaltung dahingehend erweitert werden, dass die Auslenkung des Schwingkolbens so geregelt wird, dass das Anschlagen des Schwingkolbens bei Erreichen zumindest einer seiner beiden Endlagen vermieden wird. Dabei ist es wichtiger, das Anschlagen des Schwingkolbens bei Erreichen seiner ersten Endlage, das heißt beim Ansaugen, zu vermeiden. Auf dem Weg in seine zweite Endlage, das heißt beim Pumpen, wirkt einerseits die verdrängte Flüssigkeit bremsend auf den Schwingkolben ein. Andererseits übt die sich entspannende Feder eine abnehmende Kraft auf den Schwingkolben aus, wodurch seine Bewegungsenergie entsprechend abnimmt. Eventuell weist die Schwingkolbenpumpe eine zweite Feder ausgangsseitig am Schwingkolben auf, die ebenfalls bremsend auf den Schwingkolben einwirkt. Um das Anschlagen beim Erreichen der ersten Endlage zu vermeiden, wird die Stromzufuhr der Magnetspule abhängig von den aktuell ermittelten Werten der Positions- bzw. Wegerfassung so reduziert, dass der Schwingkolben rechtzeitig vor dem Anschlagen abgebremst wird. Das kann z. B. durch eine Phasenanschnitts- und/oder Phasenabschnittsteuerung, aber auch mit Hilfe anderer Methoden der Leistungsregelung bewerkstelligt werden. Die Regelung kann aber auch einfach darin bestehen, die Stromzufuhr der Magnetspule rechtzeitig vor dem Anschlagen zu unterbrechen. Diese Ausgestaltung des Verfahrens ermöglicht einen angenehmen, leisen Betrieb der Schwingkolbenpumpe auch ohne aufwendige Geräuschdämmung und reduziert den konstruktiven Aufwand und somit die Produktionskosten. Außerdem kann dabei - wie bereits erwähnt - Energie gespart werden.

In einer weiteren vorteilhaften Ausgestaltung des Verfahrens, wird die in Pumprichtung vordere Endlage, das heißt die eingangs beschriebene erste Endlage des Schwingkolbens während eines Pumpvorgangs erfasst und daraus der Förderdruck der Schwingkolbenpumpe ermittelt. Dabei gilt: je weiter in Pumprichtung vorne die erste Endlage gemessen wird, desto geringer ist der Förderdruck. Die Kenntnis des aktuellen Förderdrucks kann genutzt werden, um die Qualität der zubereiteten Getränke zu verbessern und Selbstdiagnosen des Geräts durchzuführen. So kann zum Beispiel die Kenntnis des Förderdrucks einerseits zur Optimierung der Cremabildung bei der Herstellung eines Espressos und zum anderen zur Erkennung von Leckagen genutzt werden.

Nach einer bevorzugten Weiterbildung des Verfahrens wird in einem ersten Schritt die aktuelle Induktivität der Magnetspule gemessen und in einem zweiten Schritt daraus die aktuelle Position und/oder Wegänderung des Schwingkolbens abgeleitet. Für die Messung der Induktivität sind verschiedene Methoden denkbar. Die Messung muss dabei lediglich parallel zum normalen Betrieb der Schwingkolbenpumpe durchgeführt werden.

Eine Methode wurde bereits oben beschrieben. Hierbei wird die Induktivität der Magnetspule über drei Verfahrensschritte erfasst. Zuerst wird der Versorgungsspannung ein sinusförmiges Messsignal mit ausreichend hoher Frequenz überlagert. Anschließend wird Phasenverschiebung von Strom zu Spannung in der Magnetspule gemessen. Schließlich wird anhand der Phasenverschiebung die aktuelle Induktivität der Magnetspule errechnet.

Wie ebenfalls bereits dargelegt, kann aus den gemessenen Induktivitäten die entsprechende Position und/oder Wegänderung des Schwingkolbens abgeleitet werden. Durch Messungen werden Stützwerte ermittelt. Basierend auf den Stützwerten kann entweder eine geeignete mathematische Funktion angenähert werden oder eine Interpolation zwischen den Stützwerten ausgeführt werden, um auch Zwischenwerte für nicht gemessene Positionen zu bestimmen.

Der Vorteil des Verfahrens besteht hauptsächlich darin, dass es ohne unmittelbaren Eingriff in die Schwingkolbenpumpe auskommt und damit bei herkömmlichen Schwingkolbenpumpen nachgerüstet werden kann.

Das Prinzip der Erfindung wird im Folgenden anhand einer Zeichnung beispielshalber noch näher erläutert.

In der Zeichnung zeigen:
- Figur 1: eine Getränkezubereitungseinrichtung mit einer Schwingkolbenpumpe, einer Steuereinheit und einem Messsystem,
- Figur 2: die Schwingkolbenpumpe mit einem LVDT,
- Figur 3: die Schwingkolbenpumpe mit Transfervorrichtung,
- Figur 4: die Schwingkolbenpumpe mit Transfervorrichtung und Hallsensor, und
- Figur 5: die Schwingkolbenpumpe mit Transfervorrichtung und Lichtschranke.

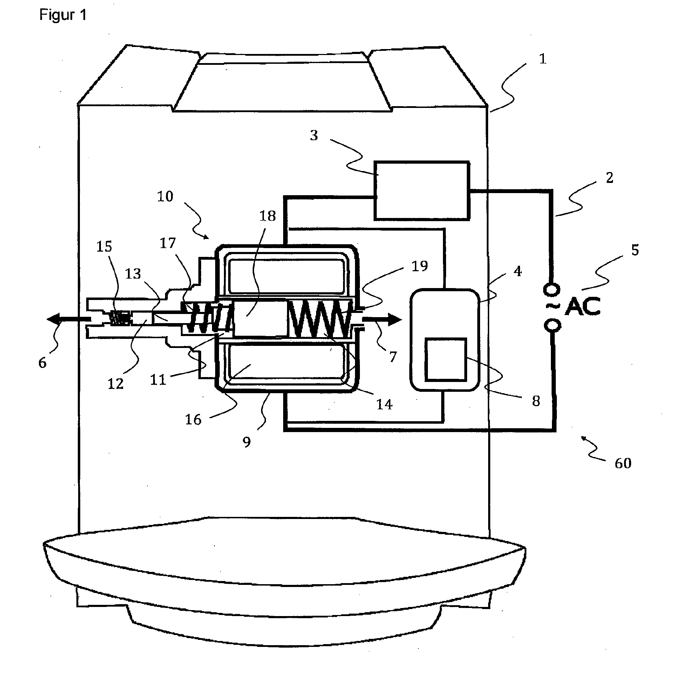

Figur 1 zeigt einen Querschnitt durch eine Schwingkolbenpumpe 10 eines stilisierten Kaffeevollautomaten 1. Die Schwingkolbenpumpe 10 umfasst ein Pumpengehäuse 9, eine Magnetspule 16, ein Auslassventil 15, eine Pumpkammer 11, einen Schwingkolben 18 in der Pumpkammer 11, der sie in eine eingangseitige Kolbenkammer 14 und eine ausgangsseitige Hubkammer 12 unterteilt, und eine eingangsseitige Spannfeder 19 und eine ausgangsseitige Bremsfeder 17 in der Kolbenkammer 14. Der Schwingkolben 18 verjüngt sich in Flussrichtung 6 sprunghaft zu einem Hubkolben 13, der passgenau zur Hubkammer 12 ausgebildet ist. Die Schwingkolbenpumpe 10 ist über einen elektrischen Stromkreis 2 mit einer Steuereinheit 3 und einer Erfassungsvorrichtung 60 verbunden, die aus einem Messsystem 4 mit einer darin integrierten Abbildungseinheit 8 besteht. Der Stromkreis 2 bezieht elektrischen Strom mit einer Netzspannung von 230 Volt und einer Frequenz von 50 Hz von einer Wechselstromversorgung 5.

Die Schwingkolbenpumpe 10 wird von einem magnetischen Feld der Magnetspule 16 angetrieben, das den ferromagnetischen Schwingkolben 18 in einer ersten Phase eines zweiphasigen Pumpzyklus gegen die Spannfeder 19 spannt und in einer zweiten Phase wieder entlässt. Die Steuereinheit 3 versorgt in der ersten Phase die Magnetspule 16 mit elektrischer Spannung, so dass ein magnetisches Feld aufgebaut wird, infolgedessen der Hubkolben 13 gegen die Federkraft der Spannfeder 19 aus der Hubkammer 12 in Gegenflussrichtung 7 ausgelenkt wird. Es entsteht ein Unterdruck in der Hubkammer 12, die sich dadurch mit Flüssigkeit füllen kann. In der zweiten Phase des Pumpzyklus unterbricht die Steuereinheit 3 die Stromversorgung 5 der Magnetspule 16, und das magnetische Feld bricht zusammen. Mangels ausreichender Gegenkraft drückt die in der ersten Phase des Pumpzyklus gespannte Spannfeder 19 den Hubkolben 13 in die Hubkammer 12 zurück. Dabei wirkt die Bremsfeder 17 bremsend auf den Schwingkolben 18 ein. Die Flüssigkeit in der Hubkammer 12 wird verdrängt und in Flussrichtung 6 über das Auslassventil 15 aus der Hubkammer 12 gefördert. Während des Pumpvorgangs wiederholt sich dieser Pumpzyklus.

Das Messsystem 4 ist zur Magnetspule 16 parallel geschaltet. Es ermittelt die Wegänderung und/oder die Position des Schwingkolbens 18 indirekt aus Messungen der Induktion der Magnetspule 16. Dazu weist das Messsystem 4 eine Oszillatorschaltung auf, mit deren Hilfe sie der Versorgungsspannung ein sinusförmiges Messsignal überlagert. So kann die Messung parallel zum normalen Betrieb der Schwingkolbenpumpe 10 durchgeführt werden. Das Messsystem 4 misst dabei über einen niederohmigen Nebenschlusswiderstand die Phasenverschiebung von Strom zu Spannungen in der Magnetspule 16. Anhand der gemessenen Phasenverschiebung errechnet das Messsystem 4 die Induktivität der Magnetspule 16. Um eine brauchbare Auflösung bei der Messung zu erhalten, erzeugt das Messsystem 4 ein Messsignal der Frequenz 4 kHz. Daraus ergibt sich eine Periodendauer von 0,25 ms pro Messung. Bei einer Netzfrequenz von 50 kHz dauert ein Pumpzyklus somit 20 ms. Während eines Pumpzyklus kann das Messsystem 4 daher 80 Werte bestimmen.

Die Abbildungseinheit 8 besteht aus einem Mikrocontroller mit einem integrierten Arbeitsund Programmspeicher. Sie hat für die Schwingkolbenpumpe 10 in einer "Look-Up-Table" eine Reihe von bereits ermittelten Wertepaaren aus Induktionswert und korrelierender Position des Schwingkolbens 18, den so genannten Stützwerten, gespeichert. Mit Hilfe einer Interpolation zwischen den Stützwerten errechnet die Abbildungseinheit 8 für die jeweils gemessene Induktion die zugehörige Position des Schwingkolbens 18 innerhalb der Pumpkammer 11. Aus den 80 während eines Pumpzyklus errechneten Positionen des Schwingkolbens 18 ermittelt die Abbildungseinheit 8 die beiden Endlagen des Schwingkolbens 18 für den jeweiligen Pumpzyklus. Unter Berücksichtigung des bekannten Schluckvolumens der Schwingkolbenpumpe 10, nämlich der geometrischen Abmessungen der Pumpkammer 11 und des Schwingkolbens 18, bestimmt die Getränkezubereitungseinrichtung 1 aus den beiden Endlagen des Schwingkolbens 18 den aktuellen Durchfluss und damit die Fördermenge für jeden einzelnen Pumpzyklus und kann damit die Qualität der zubereiteten Getränke verbessern. Dazu weisen die Getränkezubereitungseinrichtung 1 und das Messsystem 4 eine entsprechende Schnittstelle auf.

Die Steuereinheit 3 regelt die Stromzufuhr der Magnetspule 16 derart, dass ein Anschlagen des Schwingkolbens 18 eingangsseitig an der Kolbenkammer 14 zum Ende der ersten Phase des Pumpzyklus vermieden wird. Dazu unterbricht sie rechtzeitig vor dem Anschlagen die Stromzufuhr der Magnetspule 16 auf Basis der ermittelten Positionswerte des Messsystems 4. Das ermöglicht einen leisen, verschleißärmeren und vor allem energiesparenden Betrieb der Getränkezubereitungseinrichtung.

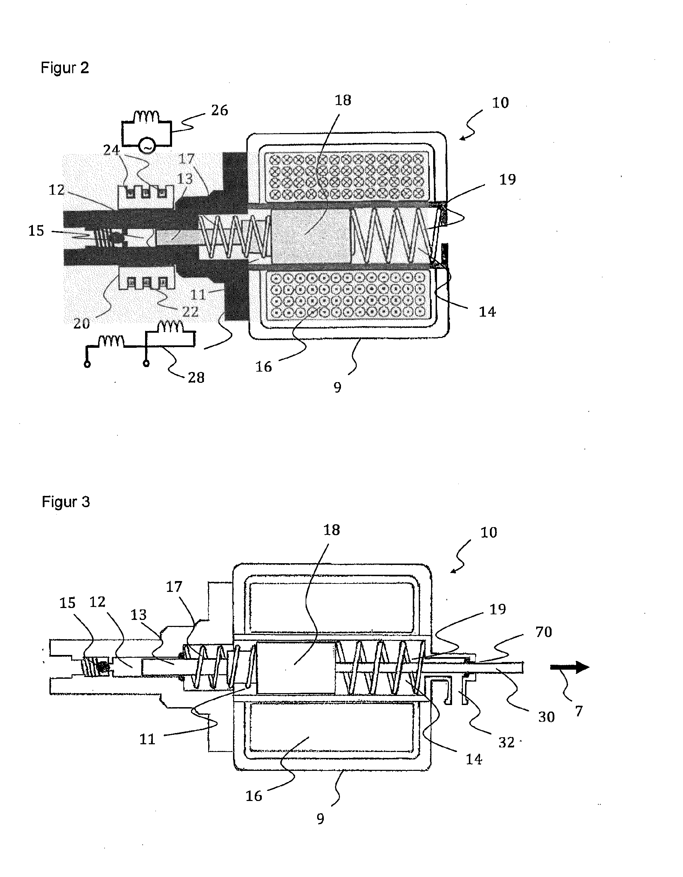

Die Figuren 2 bis 5 zeigen ebenfalls im Querschnitt die in Figur 1 dargestellte Schwingkolbenpumpe 10 mit einem unveränderten Schluckvolumen und einer jeweils variierenden Erfassungseinrichtung 60. Gleiche Bauteile sind dort mit gleichen Bezugszeichen versehen.

Im Gegensatz zu Figur 1 hat die Schwingkolbenpumpe 10 in Figur 2 einen LVDT (Linear Variablen Differentialtransformator) 20, der die Hubkammer 12 koaxial umschließt. Der LVDT 20 besteht aus einer Primärspule 22 und zwei Sekundärspulen 24. Die beiden Sekundärspulen 24 sind symmetrisch beidseitig zur in der Mitte platzierten Primärspule 22 angeordnet. An die Primärspule 22 wird in einem Primärstromkreis 26 die Erregerspannung, eine konstante Wechselspannung, angelegt. Die Frequenz der Erregerspannung liegt im kHz-Bereich und ist damit deutlich höher als die Frequenz von 50 Hz, mit der sich der Schwingkolben 18 bewegt. Das gestattet eine sinnvolle Auflösung bei der Messung. Die Sekundärspulen 24 sind in einem Sekundärstromkreis 28 gegenphasig in Reihe geschaltet, so dass sich die an den Sekundärspulen 24 abfallenden Spannungen voneinander subtrahieren. Wird der Hubkolben 13 bewegt, entsteht eine Ausgangsspannung im Sekundärstromkreis 28, deren Phase bezogen auf die Erregerspannung die Richtung und deren Größe den Betrag des zurückgelegten Weges des Hubkolbens 13 angibt.

Die Schwingkolbenpumpe 10 in Figur 3 unterscheidet sich von Figur 1 im Wesentlichen dadurch, dass der Schwingkolben 18 in eine stangenförmige Transfervorrichtung 30 übergeht, die in Gegenflussrichtung 7 aus dem Pumpengehäuse 9 herausragt. Für die Flüssigkeitszufuhr und zur Führung der Transfervorrichtung 30 ist eingangsseitig der Schwingkolbenpumpe 10 an der Pumpkammer 11 nach außen ein Kanal 32 ausgebildet. Der Kanal 32 verzweigt sich rechtwinklig zur Gegenflussrichtung 7. Über den Kanal 32 kann Flüssigkeit in die Pumpkammer 11 gelangen. In Längsrichtung bildet der Kanal 32 eine passgenaue Öffnung 70 für die Transfervorrichtung 30 aus. Durch die Öffnung 70 kann die Transfervorrichtung 30, entsprechend den Bewegungen des Schwingkolbens 18 geführt, hin und her gleiten. Dadurch wird die Bewegung des Schwingkolbens 18 nach außen transferiert und damit für eine Messung von außen zugänglich gemacht.

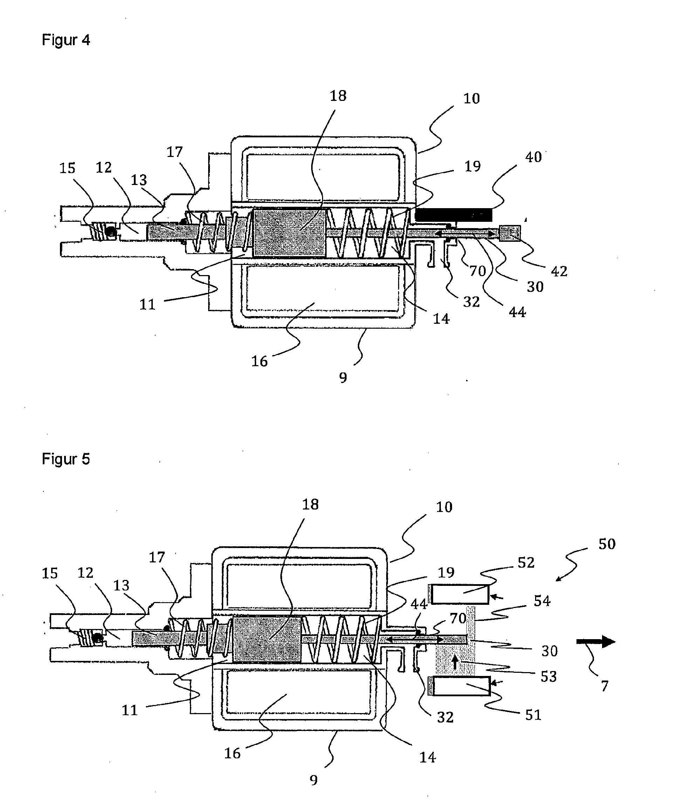

Figur 4 zeigt die Schwingkolbenpumpe 10 aus Figur 3 mit einer Transfervorrichtung 30 und mit einem Magneten 42 und einem Hallsensor 40. Der Magnet 42 ist in Gegenflussrichtung 7 am Ende der Transfervorrichtung 30 befestigt. Am Pumpengehäuse 9 ist eingangsseitig ein Hallsensor 40 parallel zur Transfervorrichtung 30 unmittelbar oberhalb des Kanals 32 befestigt, so dass der Magnet 42 durch die Längsbewegungen 44 des Schwingkolbens 18 nahe am Hallsensor 40 vorbeigeführt wird. Am Hallsensor 40 tritt eine elektrische Spannung auf, deren Wert sich entsprechend der Bewegung des Magneten 42 verändert. Für jede Position des Magneten 42 ergibt sich ein anderer Spannungswert. Daraus wird mit Hilfe der bekannten geometrischen Abmessungen der Transfervorrichtung 30, des Schwingkolbens 18 und der Pumpkammer 11 die Wegänderung und/oder die aktuelle Position des Schwingkolbens 18 ermittelt.

Figur 5 zeigt die Schwingkolbenpumpe 10 aus Figur 3 mit einer Lichtschranke 50. Die Lichtschranke 50 ist im Inneren der Getränkezubereitungseinrichtung 1 befestigt und besteht aus einem Empfänger 52 und einem Sender 51. Der Sender 51 ist unterhalb, der Empfänger 52 oberhalb der Transfervorrichtung 30 in Gegenflussrichtung 7 unmittelbar hinter dem Kanal 32 angeordnet. Beide sind senkrecht zueinander ausgerichtet, so dass der Lichtstrahl 53 des Senders 51 auf den Empfänger 52 zielt. Bewegt sich die Transfervorrichtung 30 in Längsrichtung 44, so wird der Lichtstrahl des Senders 51 abhängig von der Position der Transfervorrichtung 30 entweder nicht, teilweise oder ganz verschattet. Der Empfänger 54 wandelt den empfangenen Lichtstrahl 53 in eine Ausgangsspannung, die sich proportional zur Verschattung 54 des Lichtstrahls 53 verhält. Damit wird die Position und/oder den Weg des Schwingkolbens 18 ermitteln.

Da es sich bei der vorhergehenden, detailliert beschriebenen Schwingkolbenpumpe um ein Ausführungsbeispiel handelt, kann sie in üblicher Weise vom Fachmann in einem weiten Umfang modifiziert werden, ohne den Bereich der Erfindung zu verlassen. Insbesondere kann auch die konkrete Ausgestaltung der Schwingkolbenpumpe in anderer geometrischer Form als in der hier beschriebenen folgen. Ebenso können die Erfassungsvorrichtungen in einer anderen Form oder an anderer Stelle ausgestaltet werden, wenn dies aus Platzgründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Getränkezubereitungseinrichtung
- 2: Stromkreis
- 3: Steuereinheit
- 4: Messsystem
- 5: Stromversorgung
- 6: Flussrichtung
- 7: Gegenflussrichtung
- 8: Abbildungseinheit
- 9: Pumpengehäuse
- 10: Schwingkolbenpumpe
- 11: Pumpkammer
- 12: Hubkammer
- 13: Hubkolben
- 14: Kolbenkammer
- 15: Auslassventil
- 16: Magnetspule
- 17: Bremsfeder
- 18: Schwingkolben
- 19: Spannfeder
- 20: LVDT
- 22: Primärspule
- 24: Sekundärspule
- 26: Primärstromkreis
- 28: Sekundärstromkreis
- 30: Transfervorrichtung
- 32: Kanal
- 40: Hallsensor
- 42: Magnet
- 44: Längsbewegung
- 50: Lichtschranke
- 51: Sender
- 52: Empfänger
- 53: Lichtstrahl
- 54: Verschattung
- 60: Erfassungseinrichtung
- 70: Öffnung

## Patentansprüche

1. Getränkezubereitungseinrichtung (1) mit einer Schwingkolbenpumpe (10) mit einem Pumpengehäuse (9), mit einer Pumpkammer (11), mit einem Schwingkolben (18) in der Pumpkammer (11) und mit einer die Pumpkammer (11) koaxial umschließenden Magnetspule (16), **gekennzeichnet durch** eine Erfassungsvorrichtung (60), die so ausgebildet ist, dass sie die Wegänderung und/oder die aktuelle Position des Schwingkolbens (18) in der Pumpkammer (11) während eines Pumpvorgangs erfasst und daraus unter Berücksichtigung des Schluckvolumens der Schwingkolbenpumpe (10) den aktuellen Durchfluss der Schwingkolbenpumpe (10) ermittelt.

2. Vorrichtung nach Anspruch 1, **dadurch gekennzeichnet, dass** die Erfassungsvorrichtung (60) mit der Magnetspule (16) elektrisch verbunden ist und ein Messsystem (4) zur Messung der aktuellen Induktivität der Magnetspule (16) mit einer Abbildungseinheit (8) aufweist, die aus der gemessenen Induktivität die aktuelle Position und/oder Wegänderung des Schwingkolbens (18) bestimmt.

3. Vorrichtung nach Anspruch 1, **gekennzeichnet durch** eine Erfassungsvorrichtung mit einem die Pumpkammer (11) koaxial umschließenden LVDT (Linear Variabler Differentialtransformator) (20).

4. Vorrichtung nach Anspruch 1, **gekennzeichnet durch** eine stangenförmige Transfervorrichtung (30), die am Schwingkolben (18) befestigt ist und aus dem Pumpengehäuse (9) herausragt, und **durch** einen Bewegungssensor (50, 40) als Bestandteil der Erfassungsvorrichtung.

5. Vorrichtung nach Anspruch 4, **gekennzeichnet durch** einen optischen Sensor (50) als Bewegungssensor.

6. Vorrichtung nach Anspruch 4, **gekennzeichnet durch** einen Magneten (42) an der Transfervorrichtung (30) und einen Hallsensor (40) als Bewegungssensor.

7. Verfahren zum Betreiben einer Getränkezubereitungseinrichtung mit einer Schwingkolbenpumpe (10) mit einem Schwingkolben (18), **dadurch gekennzeichnet, dass** die Wegänderung und/oder die aktuelle Position des Schwingkolbens (18) während des Pumpvorgangs erfasst wird und dass daraus unter Berücksichtigung des Schluckvolumens der Schwingkolbenpumpe (10) der aktuelle Durchfluss der Schwingkolbenpumpe (10) ermittelt wird.

8. Verfahren nach Anspruch 7, **dadurch gekennzeichnet, dass** die in Pumprichtung vordere Endlage des Schwingkolbens (18) während eines Pumpvorgangs erfasst wird und dass daraus der Förderdruck der Schwingkolbenpumpe (10) ermittelt wird.

9. Verfahren nach Anspruch 7, **dadurch gekennzeichnet, dass** der Schwingkolben (18) so geregelt wird, dass das Anschlagen des Schwingkolbens (18) bei Erreichen zumindest einer seiner beiden Endlagen vermieden wird.

10. Verfahren nach Anspruch 7 oder 8, **dadurch gekennzeichnet, dass** die Wegänderung und/oder die aktuelle Position des Schwingkolbens (18) durch eine Ableitung aus einer aktuell gemessenen Induktivität der Magnetspule (16) ermittelt wird.

## Claims

1. Beverage preparation device (1) having an oscillating piston pump (10) with a pump housing (9), with a pump chamber (11), with an oscillating piston (18) in the pump chamber (11) and with a magnet coil (16) enclosing the pump chamber (11) coaxially, **characterised by** a detection apparatus (60) which is embodied such that it detects the change in travel and/or the current position of the oscillating piston (18) in the pump chamber (11) during a pumping process and determines the current flow rate of the oscillating piston pump (10) therefrom, taking into account the volumetric displacement of the oscillating piston pump (10).

2. Apparatus according to claim 1, **characterised in that** the detection apparatus (60) is electrically connected to the magnet coil (16) and has a measuring system (4) for measuring the current inductance of the magnet coil (16) with a mapping unit (8), which unit determines the current position and/or the change in travel of the oscillating piston (18) from the measured inductance.

3. Apparatus according to claim 1, **characterised by** a detection apparatus having an LVDT (Linear Variable Differential Transformer) (20) enclosing the pump chamber (11) coaxially.

4. Apparatus according to claim 1, **characterised by** a rod-shaped transfer apparatus (30) which is attached to the oscillating piston (18) and protrudes from the pump housing (9), and by a motion sensor (50, 40) as a component of the detection apparatus.

5. Apparatus according to claim 4, **characterised by** an optical sensor (50) as a motion sensor.

6. Apparatus according to claim 4, **characterised by** a magnet (42) on the transfer apparatus (30) and a Hall-effect sensor (40) as a motion sensor.

7. Method for operating a beverage preparation device having an oscillating piston pump (10) with an oscillating piston (18), **characterised in that** the change in travel and/or the current position of the oscillating piston (18) during the pumping process is detected and the current flow rate of the oscillating piston pump (10) is determined therefrom, taking into account the volumetric displacement of the oscillating piston pump (10).

8. Method according to claim 7, **characterised in that** the front end position in the pump direction of the oscillating piston (18) during a pumping process is detected and the delivery pressure of the oscillating piston pump (10) is determined therefrom.

9. Method according to claim 7, **characterised in that** the oscillating piston (18) is regulated such that the oscillating piston (18) is prevented from striking when it reaches at least one of its two end positions.

10. Method according to claim 7 or 8, **characterised in that** the change in travel and/or the current position of the oscillating piston (18) is determined by a derivation from a currently measured inductance of the magnet coil (16).

## Revendications

1. Équipement de préparation de boissons (1) comprenant une pompe à piston oscillant (10) munie d'un carter de pompe (9), d'une chambre de pompage (11), d'un piston oscillant (18) dans la chambre de pompage (11) et d'une bobine d'électroaimant (16) entourant la chambre de pompage (11) de manière coaxiale, **caractérisé par** un dispositif de saisie (60) qui est réalisé de manière à ce qu'il saisisse la modification de la course et/ou la position actuelle du piston oscillant (18) dans la chambre de pompage (11) pendant une opération de pompage et qu'il en détermine le débit actuel de la pompe à piston oscillant (10) en tenant compte du volume d'absorption de la pompe à piston oscillant (10).

2. Équipement selon la revendication 1, **caractérisé en ce que** le dispositif de saisie (60) est relié électriquement à la bobine d'électroaimant (16) et **en ce qu'**il présente un système de mesure (4) destiné à mesurer l'inductance actuelle de la bobine d'électroaimant (16) à l'aide d'une unité de représentation (8) qui détermine la position actuelle et/ou la modification de la course du piston oscillant (18) à partir de l'inductance mesurée.

3. Équipement selon la revendication 1, **caractérisé par** un dispositif de saisie comprenant un LVDT (transformateur différentiel à variation linéaire) (20).

4. Équipement selon la revendication 1, **caractérisé par** un dispositif de transfert (30) qui est fixé sur le piston oscillant (18) et est en saillie du carter de pompe (9), et **caractérisé par** un capteur de mouvement (50, 40) en tant que partie constituante du dispositif de saisie.

5. Équipement selon la revendication 14, **caractérisé par** un capteur optique (50) en tant que capteur de mouvement.

6. Équipement selon la revendication 4, **caractérisé par** un aimant (42) sur le dispositif de transfert (30) et par un capteur de Hall (40) en tant que capteur de mouvement.

7. Procédé de fonctionnement d'un équipement de préparation de boissons comprenant une pompe à piston oscillant (10) munie d'un piston oscillant (18), **caractérisé en ce que** la modification de la course et/ou la position actuelle du piston oscillant (18) sont saisies pendant l'opération de pompage et **en ce que** le débit actuel de la pompe à piston oscillant (10) en est déterminé en tenant du volume d'absorption de la pompe à piston oscillant (10).

8. Procédé selon la revendication 7, **caractérisé en ce que** la position finale antérieure, dans le sens de pompage, du piston oscillant (18) est saisie pendant une opération de pompage et **en ce que** la pression de refoulement de la pompe à piston oscillant (10) est déterminée à partir de cette position.

9. Procédé selon la revendication 7, **caractérisé en ce que** le piston oscillant (18) est réglé de manière à ce que la butée du piston oscillant (18) soit évitée lorsqu'il atteint au moins une de ses deux positions finales.

10. Procédé selon la revendication 7 ou 8, **caractérisé en ce que** la modification de la course et/ou la position actuelle du piston oscillant (18) sont déterminées au moyen d'une déduction à partir d'une inductance actuellement mesurée de la bobine d'électroaimant (16).
